Europäisches Patentamt

European Patent Office

Office européen des brevets

(19)

(11) Veröffentlichungsnummer: **0 368 806**

**A1**

## (12) EUROPÄISCHE PATENTANMELDUNG

(21) Anmeldenummer: 89810826.1

(22) Anmeldetag: 02.11.89

(51) Int. Cl.5 **A01N 37/40**, //(A01N37/40, 59:00,25:12)

(30) Priorität: 10.11.88 GB 8826320
22.03.89 GB 8906617

(43) Veröffentlichungstag der Anmeldung:
16.05.90 Patentblatt 90/20

(84) Benannte Vertragsstaaten:
AT BE CH DE ES FR GB GR IT LI LU NL SE

(71) Anmelder: **CIBA-GEIGY AG**
**Klybeckstrasse 141**
**CH-4002 Basel(CH)**

(72) Erfinder: **Nowak, Edward**
**4 Davey Close**
**Impington Cambridge(GB)**
Erfinder: **Baettig, Willy**
**Weiermatt 15**
**CH-4133 Pratteln(CH)**

(54) **Feste herbizide Formulierungen.**

(57) Die vorliegende Erfindung betrifft ein Mittel enthaltend Ioxinil und/oder Bromoxinil in ihrer phenolischen Form, zusammen mit einem Alkalimetallsalz einer schwachen Säure.

EP 0 368 806 A1

## Feste herbizide Formulierungen

Die vorliegende Erfindung betrifft granulierte herbizide Mittel aus Hydroxybenzonitrilen (HBN), nämlich Ioxinil und Bromoxinil.

Diese zwei Wirkstoffe werden üblicherweise in Form von Estern für emulgierbare Konzentrate (EC) und als Alkalimetallsalze für andere flüssige Formulierungen hergestellt. Die flüssigen Formulierungen, besonders EC die Ester enthalten, sind bei Hautkontakt toxisch.

Die HBN-Salze sind in Wasser löslich, was die Dispersion der Formulierung in wässrigen Systemen erleichtert. Diese HBN-Salze sind jedoch, wenn sie in Form eines trockenen Pulvers eingesetzt werden, für Augen, Nase und Rachen sehr stark reizend. Daher sind diese Produkte schwierig zu handhaben und haben dazu noch die unerwünschte Eigenschaft, sehr schwierig zu trocknen zu sein, was die Formulierung mit anderen feuchtigkeitsempfindlichen Wirkstoffen erschwert.

Die HBN in Form ihrer Phenole besitzen nicht dieselben Reizeigenschaften oder Trocknungsprobleme wie die entsprechenden Salze. Sie sind jedoch in Wasser unlöslich und können daher nur schwer als Pulver oder Granulate formuliert werden.

Die vorliegende Erfindung löst dieses Problem durch Formulierung der phenolischen Form der HBN mit einem Alkalimetallsalz, welches bei Zugabe der Formulierung zu Wasser eine in situ Neutralisation bewirkt, die die löslichen HBN-Salze entstehen lässt.

Demzufolge betrifft die vorliegende Erfindung ein Mittel bestehend aus Ioxinil und/oder Bromoxinil in ihrer phenolischen Form zusammen mit einer Menge eines Alkalimetallsalzes einer schwachen Säure, wobei die Menge des Alkalisalzes vorzugsweise derjenigen entspricht, die stöchiometrisch zur Umsetzung mit der Phenolform von Ioxinil und/oder Bromoxinil erforderlich ist, um aus diesen wasserlösliche Salze herzustellen.

Unter schwachen Säuren werden organische oder anorganische Säuren verstanden, deren Dissoziationskonstante $K_a$ zwischen $10^{-8}$ und $10^{-3}$ liegt.

Als Alkalimetallkationen sind die Ionen von Natrium und Kalium bevorzugt.

Geeignete Salze von schwachen Säuren sind beispielsweise Acetate, Carbonate, Hydrogencarbonate, Hydrogenphosphite, Dihydrogenphosphate, Hydrogenphosphate, Nitrite, Hydrogensulfite und Polycarbonsäuresalze wie etwa Malonate.

Bevorzugte Alkalimetallsalze von schwachen Säuren sind Natriumcarbonat, Kaliumcarbonat, Natriumacetat, Natriummalonat und Natriumhydrogenphosphat. Ein ganz besonders bevorzugtes Alkalimetallsalz einer schwachen Säure ist Natriumcarbonat.

Einfach hergestellte phenolische Formulierungen enthalten Natrium- oder Kaliumsalze von schwachen Säuren.

Werden diese Wirkstoffe in den Spritztank gegeben, so lösen sie sich unter Bildung von Spritzbrühe auf. Die Vorteile des Gebrauchs dieser Art von festen Formulierungen sind:

Die wenig reizend wirkenden und gegen Feuchtigkeit wenig empfindlichen HBN-Phenole können bei der Herstellung verwendet werden.

Die Formulierungen in ihrer festen Form weisen eine sehr einfache Zusammensetzung auf und können mit oder ohne den Gebrauch von Netzmitteln oder Dispergatoren hergestellt werden. Die Formulierungen können wasserlösliche Träger- oder Füllstoffe enthalten.

Die erfindungsgemässen Mittel können auch kleinere Mengen anionischer oberflächenaktiver Stoffe enthalten. Geeignete anionische oberflächenaktive Stoffe sind Polymer-oder Copolymermoleküle, die hydrophile Gruppen enthalten welche Anionen bilden können, wie zum Beispiel Polymer- oder Copolymermoleküle, die Carboxylgruppen, Schwefelsäureestergruppen, Sulfonsäuregruppen oder Phosphorsäureestergruppen enthalten.

Bevorzugte Polymermoleküle sind Polyacrylate, Alkalimetallsalze von Diisobutylenmaleinsäurecopolymeren, Ligninsulfonate sowie kondensierte Alkylarylsulfonate. Ein ganz besonders bevorzugter anionischer oberflächenaktiver Stoff ist das Natriumsalz vom Diisobutylenmaleinsäurecopolymer.

Geeignete Gruppen wasserlöslicher Träger- oder Füllstoffe sind organische und anorganische Salze, Harnstoffe und Zucker. Bevorzugte wasserlösliche Träger- oder Füllstoffe sind Harnstoffe und anorganische Salze. Ganz besonders bevorzugte Träger- oder Füllstoffe sind beispielsweise Natriumsulfat, Kaliumsulfat, Natriumchlorid, Kaliumchlorid, Natriumnitrat, Kaliumnitrat und Calciumnitrat, insbesondere aber Natriumsulfat.

Aus der Tatsache, dass die Wirkstoffe und in vielen Fällen die Formulierungen im Spritztank gelöst werden, resultiert eine nicht sedimentierende Spritzbrühe, die erfolgreich über einen längeren Zeitraum versprüht werden kann.

Wegen der Löslichkeit der Formulierungen ist ein feines Mahlen der Wirkstoffe nicht notwendig.

Die erfindungsgemässen Formulierungen können granuliert werden um den Staubanfall, der im allgemeinen unerwünscht ist, zu reduzieren.

Die Granulierung dieser Formulierungen kann durch die Anwendung von Techniken, wie Kompaktierung, Extrusion, Agglomeration oder Sprühtrocknung, erreicht werden.

Kompaktierungsgranulation umfasst das Verpressen der trockenen pulverförmigen Komponenten zu Platten, welche anschliessend durch den Einsatz von üblichen Zerkleinerungsmaschinen zu Granulaten zerkleinert werden.

Bei der Extrudierungsgranulation wird eine Paste oder ein feuchtes Pulver der Formulierung durch ein Gitternetz gepresst. Das extrudierte Material wird anschliessend getrocknet und in Granulate von geeigneter Teilchengrösse zerkleinert.

Bei der Agglomerationsgranulation wird eine Flüssigkeit, welche üblicherweise wässrig ist, in ein fliessfähig gemachtes Pulver gespritzt. Die Pulveragglomerate bilden grössere Partikel, welche anschliessend getrocknet werden. Sprühtrocknungsgranulierung umfasst die Herstellung einer Lösung oder Suspension der Formulierung welche anschliessend von oben nach unten gegen einen heissen Luftstrom gesprüht wird. Die Tropfen werden dabei unter Bildung sphärischer Granulate getrocknet. Bei der Sprühtrocknung findet während der Herstellung der Lösung oder Suspension eine Reaktion zwischen dem HBN-Phenol und dem Salz einer schwachen Säure statt. Dies bedeutet, dass bei dieser Granulierungstechnik HBN-Salze gebildet werden.

. In einem gewissen Ausmass kann diese Salzbildung ebenfalls bei Extrusions- oder Agglomerationsgranulierungsverfahren auftreten, falls Mengen eines wässrigen Mediums vor bzw. während der Granulierung zugesetzt werden. Ein nachteiliger Effekt auf die Qualität der Formulierung konnte dabei nicht beobachtet werden.

Bei einer anderen Form der erfindungsgemässen Formulierungen werden die HBN-Verbindungen mit anderen löslichen Wirkstoffen, beispielsweise lösliche Salze von Chlor-phenoxyalkancarbonsäuren, wie Mecoprop oder Sulfonylharnstoffen, wie Triasulfuron, gemischt. Im Falle von Triasulfuron, welches ein hochwirksames Herbizid ist, nimmt die Löslichkeit mit steigendem pH zu. Bei pH 2,5 ist es unlöslich, bei pH 7 hat es dagegen eine Löslichkeit von 1,5 g/l. Wegen der Hydrolyse von Triasulfuron bei niedrigen pH-Werten bildet pH 5-6 einen optimalen Bereich.

Die in diesen Fällen hergestellten Granulate haben die gleiche volle Dispergierbarkeit und Löslichkeit beim Einrühren in die Spritzbrühe.

Die folgenden Beispiele dienen der Erläuterung der vorliegenden Erfindung.

Beispiele 1 bis 3:

Mittel bestehend aus loxinil und Bromoxinil in ihrer Phenolform sowie einem Salz einer schwachen Säure wurden formuliert und besitzen die in Tabelle 1 aufgeführten Zusammensetzungen:

Tabelle I

| Verbindung | Gew.% | Gew.% | Gew.% |
|---|---|---|---|
| loxinil als Phenol | 30 | 30 | 30 |
| Bromoxinil als Phenol | 30 | 30 | 30 |
| Natriumcarbonat | 15 | 20 | ad 100 |
| Natriumsulfat | ad 100 | ad 100 | - |
| Natriumsalz von Maleinsäurediisobutylencopolymer | 0-2 | 0-2 | 0-2 |

Die pulverisierten Verbindungen wurden homogenisiert und dann nach einer der vorher beschriebenen Techniken granuliert. Das Ergebnis sind wasserlösliche Granulate, die sich unter Bildung der Spritzbrühe leicht in Wasser lösen.

Beipsiel 4:

Eine Formulierung ähnlich der Beispiele 1 bis 3, jedoch Mecoprop in Form eines Salzes enthaltend,

3

wird hergestellt und besitzt die in Tabelle II aufgeführte Zusammensetzung:

Tabelle II

| Verbindung | Gew.% |
|---|---|
| Ioxinil als Phenol | 5,0 |
| Bromoxinil als Phenol | 5,0 |
| Mecoprop als Triethanolaminsalz | 46,5 |
| Natriumsalz von Maleinsäurediisobutylencopolymer | 2,0 |
| Natriumcarbonat | 1,0 |
| Natriumsulfat | ad 100 . |

Die pulverisierten Verbindungen können in einem üblichen Mischer homogenisiert und anschliessend durch Kompaktierung mit nachfolgenden Sieben auf die gewünschte Teilchengrösse granuliert werden.

Beispiel 5:

Die in Tabelle III definierte Formulierung wird hergestellt:

Tabelle III

| Verbindung | Gew.% |
|---|---|
| Triasulfuron | 0,25 |
| Ioxinil als Phenol | 5,0 |
| Bromoxinil als Phenol | 5,0 |
| Mecoprop als Magnesiumsalz oder Triethanolaminsalz | 46,75 |
| Natriumsalz von Maleinsäurediisobutylencopolymer | 1,0 |
| Natriumcarbonat | 1,0 |
| Natriumsulfat | ad 100 |

Die Formulierung wird unter Verwendung der in Beispiel 4 beschriebenen Technik granuliert.

**Ansprüche**

1. Herbizides Mittel, dadurch gekennzeichnet, dass es Ioxinil und/oder Bromoxinil in ihrer phenolischen Form zusammen mit einem Alkalimetallsalz einer schwachen Säure enthält.

2. Herbizides Mittel nach Anspruch 1, dadurch gekennzeichnet, dass das Salz einer schwachen Säure mindestens in einer Menge vorhanden ist, die zum stöchiometrischen Umsetzung mit dem Phenol von Ioxinil und/oder Bromoxinil erforderlich ist, um aus diesen wasserlösliche Salze zu bilden.

3. Herbizides Mittel nach Anspruch 1 oder 2, dadurch gekennzeichnet, dass das Alkalimetallsalz einer schwachen Säure ein Natrium- oder Kaliumsalz einer Carbonsäure, Polycarbonsäure oder Phosphorsäure ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-1 542 951  (MAY & BAKER LTD)<br>* Seite 1, Absätze 1-3; Seite 3, Absätze 2-4; Seite 4, Absatz 2; Seite 13, letzter Absatz; Beispiel 4 *<br>--- | 1-3 | A 01 N  37/40 //<br>(A 01 N  37/40<br>A 01 N  59:00<br>A 01 N  25:12 ) |
| X | GB-A-1 067 032  (MAY & BAKER LTD)<br>* Seite 1, Zeilen 10-13,33-41; Seite 2, Zeilen 87-104; Seite 3, Zeilen 23-47; Seite 12, Zeilen 13-35 *<br>--- | 1-3 | |
| Y | FR-A-2 589 325  (CO. FRANCAISE DE PRODUITS INDUSTRIELS)<br>* Seite 1, Zeilen 4-18; Seite 2, Zeilen 13-30; Seite 4, Zeile 29 - Seite 5, Zeile 5; Beispiele 1,2 *<br>--- | 1-3 | |
| Y | FR-A-2 509 575  (RHONE-POULENC AGROCHIMIE)<br>* Seiten 1-3, Zeile 2; Seite 4, Zeilen 6-24; Beispiele 1,2; Ansprüche 1-3,5 *<br>----- | 1-3 | |
| | | | RECHERCHIERTE SACHGEBIETE (Int. Cl.5)<br><br>A 01 N |

Der vorliegende Recherchenbericht wurde für alle Patentansprüche erstellt

| Recherchenort | Abschlußdatum der Recherche | Prüfer |
|---|---|---|
| DEN HAAG | 12-02-1990 | MUELLNERS W. |